# EUROPEAN PATENT APPLICATION

(11) **EP 1 234 711 A1**
(43) Date of publication of application: **28.08.2002**
(21) Application number: 00966437.6
(22) Date of filing: 12.10.2000
(51) Int. Cl.: B60L 3/00

(54) **ELECTRIC VEHICLE AND METHOD FOR MANAGING THE SAME**

(30) Priority: 21.10.1999 JP 30027999
(71) Applicant: Tokyo R & D Co., Ltd., Minato-ku, Tokyo 106-0032 (JP)
(72) Inventor: ISHII, Hiroshi Road Co., Ltd., Tachikawa-shi Tokyo 190 0012 (JP); AOKI, Takashi Road Co., Ltd., Machida-shi Tokyo 194-8533 (JP); KASUGA, Nobuyuki Tokyo R & d Co., Ltd., Atsugi-shi Kanagawa 243-0035 (JP)
(74) Representative: Prüfer, Lutz H., Dipl.-Phys.
(86) International application number: JP0007078
(87) International publication number: WO01028805

(57) **Abstract**

An electric vehicle (1) comprises a rechargeable secondary battery (30), an electric motor (9) for driving a running section such as wheels, and a controller (5) for conducting control to drive the electric motor (9) by use of the power from the secondary battery (30). The electric vehicle further comprises a clock means (7) for counting the current time, a wheel rotation detector (10) for detecting the rotation of a wheel, and an interface means (15) for storing in a detachable and attachable external storage medium vehicle management information created by the controller (5) based on information from the clock means (7) and the wheel rotation detector (10) and for reading the stored information.

## Description

### TECHNICAL FIELD

The present invention relates to an electric vehicle, for example, a compact electric automobile, an electric bicycle, an electric wheelchair or the like using a rechargeable secondary battery and an electric motor driven by electric power of the battery and to a method for managing the electric vehicle.

### BACKGROUND TECHNOLOGY

Generally, it is rather difficult to appropriately manage and operate movement of many vehicles in public offices, companies, taxi companies and the like, and vehicles have not necessarily been used in efficiently operated conditions.

For instance, in the case where, in an office of a company, a plurality of persons use a plurality of electric vehicles (hereinafter, referred to as only "vehicles") in the office, it is very difficult to manage the determination of who may use which vehicle while managing how much which person used which vehicle.

There is a possibility that even if keys of the vehicles are kept at a common place, a vehicle cannot be used because the key of the vehicle is confused with another or the person who used the vehicle keeps the key by mistake, or the car is used by a person other than a proper driver.

Further, it is troublesome to manage how much expense is incurred by all of the factors of refueling gasoline at a gas station for a conventional vehicle with an engine. Conventionally, the driver reports individually distance and period used, and separately records the amount of refueling and the expense at the gas station. This is far from a precise management of operation.

This invention is made to improve the above-described disadvantage in the conventional electric vehicle, and its object is to make it possible to execute determination of authorization to use the electric vehicle and/or determination of authorization to handle battery charge or the like. by using an external storage medium such as a card having a nonvolatile memory or the like so as to limit a user and a manager as well as to enable easy and precise management of operation.

The external storage medium in this case may be a magnetic system or an IC memory as long as it has a nonvolatile memory. There is no limitation in method, shape and so on if the external storage medium can send and receive information by an interface means and is suitable for the purpose of its use.

For example, by making the connecting structure of the later-described interface means, signal arrangement, signal protocol and so on conform to PCMCIA which is generally used in personal computers, it becomes possible to use a widespread memory card conforming to PCMCIA. Hereinafter, this external storage medium is referred to as a "card".

Necessary vehicle management information (vehicle number, time and period of use, distance used and so on) is recorded on the card so as to improve precision and facility of operation management.

More specifically, what is intended by this invention is to enable easy and precise operation management including limitation of a driver by storing vehicle management information on operation of an electric vehicle in an external storage medium such as a card having a nonvolatile memory or the like.

### DISCLOSURE OF THE INVENTION

In order to attain the above object, the present invention provides the following electric vehicle and method for managing the electric vehicle.

The electric vehicle according to the present invention is an electric vehicle including at least a pack of rechargeable secondary battery, an electric motor for driving a running section such as wheels and the like, and a controller for conducting control to drive the electric motor by electric power of the secondary battery, which comprises: a clock means for counting a current time; a wheel rotation detector for detecting rotation of the wheels; and an interface means for storing in a detachable and attachable external storage medium vehicle management information generated by the controller based on information from the clock means and the wheel rotation detector, and for reading the stored information.

In this electric vehicle, the interface means may be provided in an instrument panel section of the vehicle. Alternatively, the interface means may be provided in a helmet case of the vehicle.

Further, it is desirable that an interface means for a user and an interface means for management are provided as the interface means.

In this case, it is preferable that the interface means for a user is provided in the instrument panel section and the interface means for management is provided in the helmet case respectively.

In order to manage the above-described vehicle, an electric vehicle managing method according to the present invention is characterized in that information on mileage is stored at a stop time after driving of the electric vehicle and a battery capacity of the secondary battery is stored during charge of the secondary battery respectively in the external storage medium via the interface means as the vehicle management information.

Further, in the electric vehicle managing method, it is preferable that when the vehicle management information is stored in the external storage medium, two information regions are reserved in the external storage medium, and the vehicle management information is stored in turn in the two reserved regions.

### BRIEF DESCRIPTION OF DRAWINGS

FIG. 1 is a block circuit diagram showing a configuration of a first embodiment of an electric vehicle according to the invention;
FIG. 2 is a block circuit diagram showing a concrete configuration example of a measuring means 31 provided in each of battery units 3A and 3B in FIG. 1;
FIG. 3 is a flowchart showing processes by a controller relating to determination of authorization to use in the electric vehicle shown in FIG. 1;
FIG. 4 is a flowchart showing processes by the controller relating to processing at the end of use of the same;
FIG. 5 is a flowchart showing processes by the controller relating to processing at the end of management of the same;
FIG. 6 is a block circuit diagram showing a configuration of a second embodiment of the electric vehicle according to the invention;
FIG. 7 is a flowchart showing processes by a controller relating to determination of authorization to use in the electric vehicle shown in FIG. 6; and
FIG. 8 is a flowchart showing processes by the controller relating to processing at the end of use of the same.

### BEST MODE FOR CARRYING OUT THE INVENTION

Hereinafter, preferred embodiments of the present invention will be specifically described with reference to the drawings.

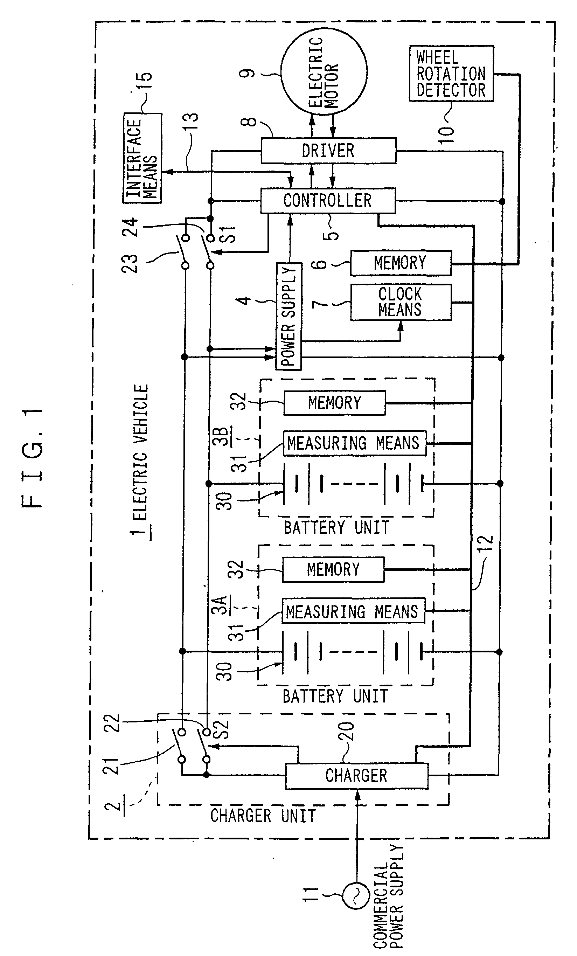

First, a first embodiment of an electric vehicle according to the invention is explained with FIG. 1 to FIG. 5. FIG. 1 is a block circuit diagram showing a configuration of the electric vehicle.

An electric vehicle 1 of this embodiment is constituted by a charger unit 2, battery units 3A and 3B (an example in which two battery units are mounted is shown in this embodiment, but one battery unit or more may be adoptable), a power supply 4, a controller 5, a memory 6, a clock means 7, a driver 8, an electric motor 9, a wheel rotation detector 10, an interface means 15 and so on.

The charger unit 2 is constituted by a charger 20 being a charger means supplied with electric power from a commercial power supply 11 or an alternative power supply to charge respective secondary batteries 30 of the battery units 3A and 3B, and switches 21 and 22 controlled by a switch control signal S2 from the charger 20 to switch to either the battery unit 3A or 3B to be charged. Further, the charger 20 includes an interface with a system bus 12.

Each of the battery units 3A and 3B is constituted by a rechargeable secondary battery (which may be a battery pack composed of a plurality of storage batteries or an alternative electric energy storage means) 30; a measuring means 31 constituted by a sensor and a measurement circuit for measuring output voltage and charge and discharge current values of the secondary battery 30 and measuring temperature of the secondary battery 30 or ambient temperature and an interface with the system bus 12; and a memory 32 constituted by a nonvolatile memory such as an EEPROM for storing properties of the secondary battery 30 and battery information needed by the electric vehicle 1 measured by the measuring means 31, and an interface with the system bus 12 for making it possible to read and write the data.

It should be noted that the charger unit 2 and the battery units 3A and 3B are fixedly provided on the body of the electric vehicle 1 not to be easily removed therefrom.

The memory 6 is constituted by a nonvolatile memory such as an EEPROM for storing at least identification information on a person authorized to use and a manager stored in the aforementioned card having a nonvolatile memory, and an interface with the system bus 12 for making it possible to read and write its data.

The controller 5 comprises a microcomputer and thus has a function of reading/writing via the later-described interface means 15 the information on the card which is an installed external storage medium, and conducting main control regarding the operation of the electric vehicle such as; determination of which battery unit is used based on the battery information stored in the respective memories 32 of the battery units 3A and 3B and the like; switching between switches 23 and 24 according to a switch control signal S1; and how the driver 8 is operated and the like. The controller 5 also has a residual capacity managing function capable of providing information on the residual capacities of the secondary batteries 30 of the battery units 3A and 3B from information such as the value of the discharge current detected by the measuring means 31, the charge capacity from the charger 20 and so on.

The clock means 7 is constituted by a clock function of counting the date and time by operating as long as it is supplied with power supply and an interface with the system bus 12.

The power supply 4 is supplied with electric power from the battery units 3A and 3B and the charger unit 2 to supply necessary power to the controller 5 and the clock means 7.

The interface means 15, which serves a function of connecting to the card as being an installed external storage medium, is connected to the controller 5 by an IF signal line 13.

The interface means 15 can be provided in an instrument panel section or a helmet case of the electric vehicle 1. When the interface means 15 is provided in the instrument panel section, it has excellent operability but requires countermeasures to be protected from rain, dust and the like. When the interface means 15 is provided in the helmet case, it slightly degrades in operability though it is immune against rain and dust.

The wheel rotation detector 10 is constituted by a detector for detecting rotation of wheels of the electric vehicle 1 and an interface with the system bus 12. The detection contents by the detector may be that with which movement of the electric vehicle 1 can be determined, such as rotation of the wheels and the number of rotations or the like. If the electric motor 9 is directly connected to the wheels by a gear, a chain or the like, the rotation of the wheels can be detected by the rotation of the electric motor 9.

The driver 8 is supplied with electric power from the battery units 3A and 3B, and drives and controls the electric motor 9 in response to a control signal from the controller 5.

The electric motor 9 is a DC motor, a DC brushless motor or the like for driving a running section such as the wheels and the like of the electric vehicle 1, and may include an actuator and the like for actuating a break and the like.

The system bus 12 is a bus used for transferring information to and from the charger 20 of the charger unit 2, the respective measuring means 31 and memories 32 of the battery units 3A and 3B, the memory 6, the clock means 7, the wheel rotation detector 10, and the controller 5, and is generally constituted by a data bus, an address bus and a control bus, but a serial bus, a parallel bus or any other constitution may be adopted if only information can be transferred to and from each unit and component.

The charger 20 of the charger unit 2 includes a circuit for making alternating current input supplied from the commercial power supply 11 to a direct voltage suitable for charge and outputting it and a microcomputer, obtains information such as a residual battery capacity and the battery properties stored in the memories 32 of the battery units 3A and 3B and the measured information by the measuring means 31 via the system bus 12, and determines the timing of charging the respective secondary batteries 30.

Then, the charger 20 turns ON one or both of the switches 21 and 22 by the switch control signal S2 to select a charger unit to be charged and performs an optimal charge to the secondary battery 30 of the charger unit according to the information from the memory 32 and the measuring means 31.

The charger unit 2, however, is not essential for the electric vehicle 1, and thus it may be suitable to set a charger device at a place with the commercial power supply 11 or an alternative power supply outside the vehicle and, when charge is conducted to the secondary battery 30, to move the electric vehicle 1 close to the charger device and connect the battery unit 3A or 3B to the charger device to thereby conduct charge.

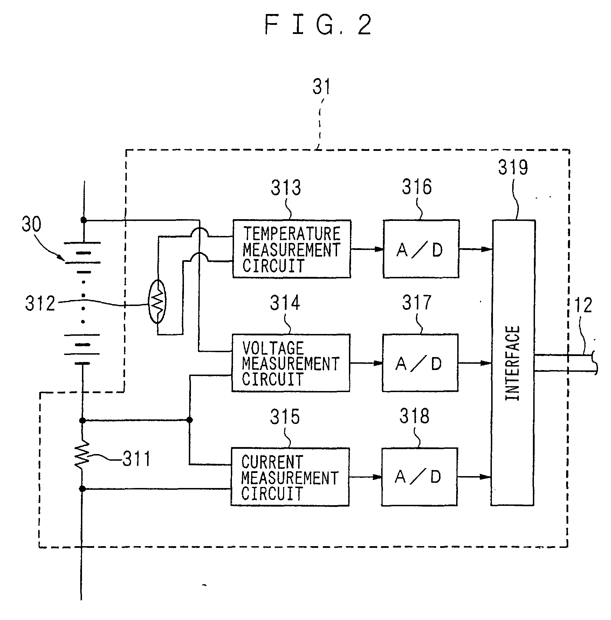

Here, a concrete example of the measuring means 31 provided in the battery units 3A and 3B respectively is shown in FIG. 2.

The measuring means 31 is constituted by a resistance 311 with a small resistance value for measuring an electric current, which is connected in series with the secondary battery 30, a thermistor 312 being a sensor for measuring temperature, which is provided in close contact with or in the vicinity of the secondary battery 30, a temperature measurement circuit 313, a voltage measurement circuit 314, a current measurement circuit 315, A/D conversion circuits 316, 317 and 318, and an interface 319 with the system bus 12.

The temperature measurement circuit 313 converts a change in a resistance value caused by temperature of the thermistor 312 into a voltage, measures the temperature of the secondary battery 30 or the ambient temperature, converts the measured value into a digital value with the A/D conversion circuit 316, and outputs it to the system bus 12 via the interface 319. Incidentally, if the thermistor 312, the temperature measurement circuit 313, and the A/D conversion circuit are provided for each cell of the secondary battery 30, or for each group of a plurality of cell, the temperature measurement can be carried out more minutely.

The voltage measurement circuit 314 measures terminal voltage of the secondary battery 30, converts the measured value into a digital value with the A/D conversion circuit 317, and outputs it to the system bus 12 via the interface 319. Incidentally, if the voltage measurement circuit 314 and the A/D conversion circuit are provided for each cell of the secondary battery 30, or for each group of a plurality of cell, the voltage measurement can be carried out more minutely.

The current measurement circuit 315 measures a value of a discharge current or a charge current of the secondary battery 30 by measuring voltage drop caused by the resistance 311, converts the measured value into a digital value with the A/D conversion circuit 318, and outputs it to the system bus 12 via the interface 319.

While the current is measured by voltage drop caused by the resistance in this example, there also is a method of detecting the current using a current transformer, a hall device or the like.

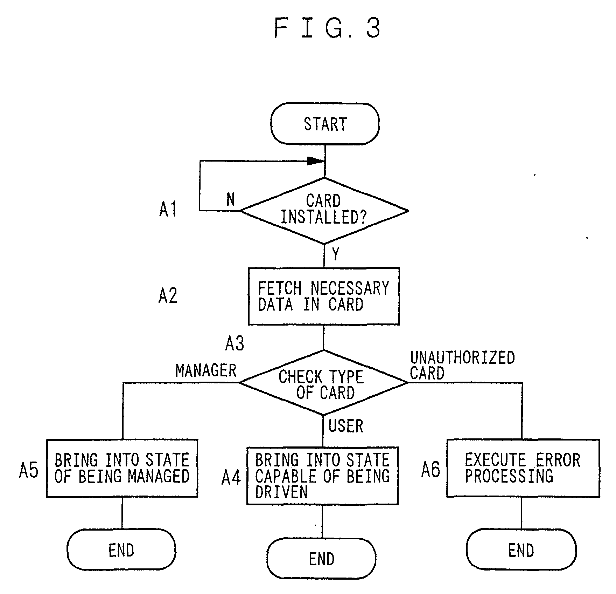

Next, action according to the invention in the electric vehicle 1 of the first embodiment shown in FIG. 1 is explained with reference to flowcharts in FIG. 3 to FIG. 5. It should be noted that basic actions such as control of driving the vehicle, charging action, battery management and the like are not related to the invention and thus the description thereof is omitted.

### (1) Determination of authorization to use

Explanation is made with FIG. 3 regarding processing by the controller 5 from the performance of determination of authorization to use to a state of capable of being driven or a state for management.

The controller 5 is operating even during non-operation state (waiting state) of the electric vehicle 1 and executing the processing shown in the flowchart of FIG. 3.

When this processing starts, the controller 5 first repeatedly checks whether or not the card is installed via the IF signal line and the interface means 15 in step A1. Then, when the card is installed, the controller 5 proceeds to step A2. This check is performed by reading a signal indicating the installation of the card or information on a predetermined location or the like.

In step A2, the controller 5 reads and fetches necessary data from a predetermined area in the card. Thereafter, the controller 5 proceeds to step A3 and checks the type of the card. In the check in step A3, the controller 5 determines whether the card is one for an authorized person to use (drive) or for the manager, as well as whether or not the card is authorized to be used, and so on. As a result, when the card is one for a person is the user, the controller 5 proceeds to step A4, and when the card is one for the manager, it proceeds to step A5. Otherwise the controller 5 recognizes the card as an unauthorized card and proceeds to step A6.

In step A4, the controller 5 brings the electric vehicle 1 into the state capable of being driven by a predetermined method, and ends this processing while maintaining the state.

In step A5, the controller 5 brings the electric vehicle 1 into the state of being managed by a predetermined method, and ends this processing while maintaining the state.

In step A6, the controller 5 executes predetermined error processing (at least prohibiting driving) and ends this processing. As this error processing, the controller 5 allows a buzzer to sound, performs a display, or gives information "You are not authorized to use the vehicle with this card." by speech synthesis, though they are not shown.

### (2) Processing at the end of use

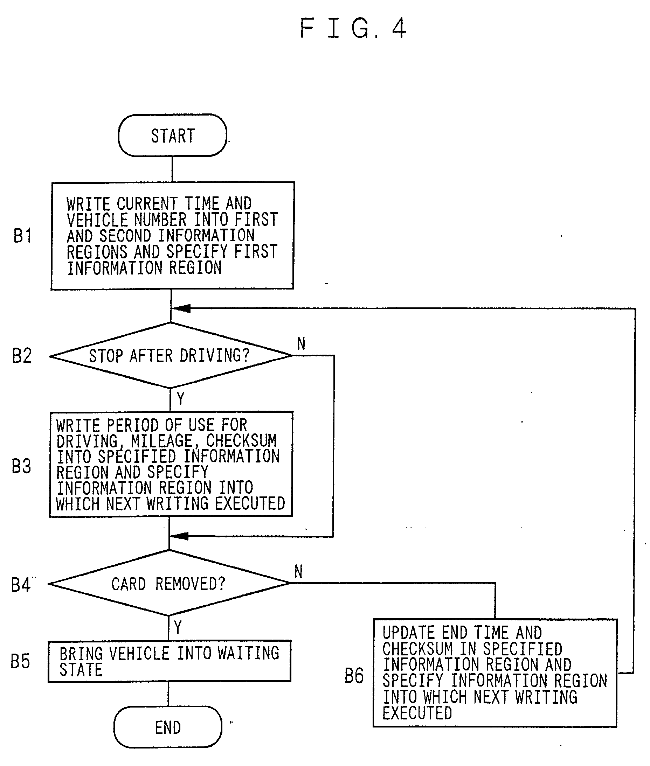

Next, the processing at the end of use of the electric vehicle is explained with the flowchart in FIG. 4.

When the use of the electric vehicle 1 is completed, the card shall be in a state such that necessary information as a managing system such as a use start/end time, a period of use, mileage and the like is recorded therein.

In this embodiment, no specific action (a lock mechanism being mechanically provided so that when an operation for removal is performed, the controller recognizes it and writes necessary information into the card, or so on) is taken for permission to remove it. Therefore, in addition to processing of writing update information every stop of the vehicle, and reservation of two information regions in the card in order not to make the card an unauthorized card due to removal of the card during writing and alternately writing into the information regions, checksums are provided in this embodiment to check an error and setting of data in the information regions.

When the information is fetched from the card by a personal computer or the like, two checksums are checked. When both checksums are normal, information at a later time, having a longer period, having a larger mileage or the like is treated as being correct. Meanwhile, when one checksum has an error, the other information is used, thereby making it possible to minimize a trouble occurring when the card is removed during writing. This is similarly applied to a state managed by the controller 5.

The flowchart in FIG. 4 shows the processing by the controller 5 after confirming the user by the check at the installation of the card.

First, in step B1, the controller 5 reads the current time from the clock means 7 via the system bus 12, writes the current time and a vehicle number held in the memory 6 into specified locations within the first and second information regions in the installed card via the interface means 15, clears the other parts, and writes checksums. The controller 5 executes writing to specify the first information region into a writing management section, in the memory 6 directly managed by the controller 5, which specifies a predetermined location in an information region into which next writing is executed, and then proceeds to step B2.

In step B2, the controller 5 checks whether or not it is a stop after driving, and when it is a stop after driving, the controller 5 proceeds to step B3 and otherwise to step B4.

In step B3, the controller 5 obtains the current time from the clock means 7 via the system bus 12 to calculate a period of use. Similarly, the controller 5 obtains the rotation information from the wheel rotation detector 10 to find a mileage from, for example, the circumference of the wheel, and generates checksum data of all information including a drive start time. Then, the controller 5 writes information including a use end time, the period of use for driving, the mileage, the checksum data into the information region which is previously specified by the writing management section. The controller 5 stores in the writing management section the second information region when the first information region is specified currently, or stores the first information region when the second information region is specified, and then proceeds to step B4.

In step B4, the controller 5 checks whether or not the card is removed, and proceeds to step B5 when the card is removed, and proceeds to step B6 when not removed (still installed). In step B5, the controller 5 brings the electric vehicle 1 into a waiting state by a predetermined method and ends the processing.

In step B6, the controller 5 obtains the current time from the clock means 7 via the system bus 12 to calculate a period of use and generates checksum data. Then, the controller 5 updates the use end time and the checksum data in the information region which is previously specified by the writing management section, and stores in the writing management section the second information region when the first information region is specified currently, or stores the first information region when the second information region is specified, and then returns to step B2.

### (3) Processing at the end of management

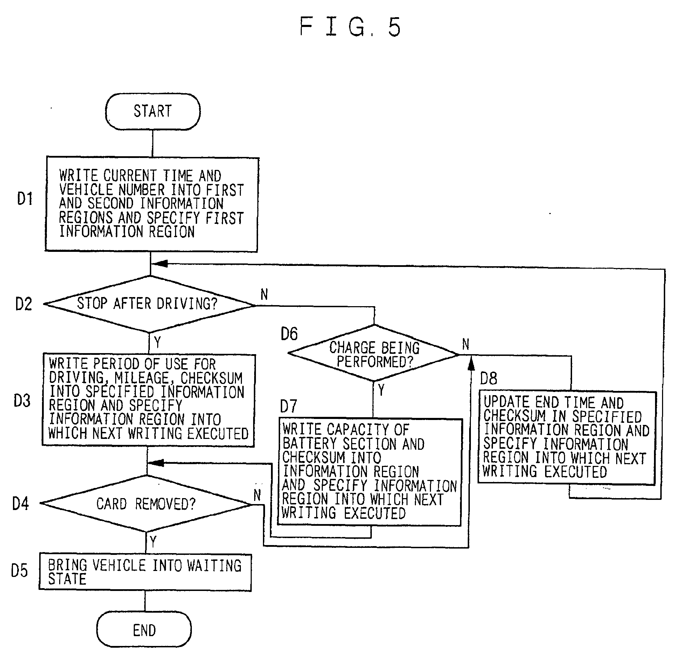

While items of management depend on the management system, this explanation is made on management including charge of the secondary battery additional to the manegement for a general user. The action by the controller 5 in this case is shown in the flowchart in FIG. 5.

When the use by the manager is completed, information on charge, for example, a charge end time, charge capacity and the like, in addition to the use start/end time, the period of use, and the mileage, are required for the card. With this information and management of residual capacity of the battery which is not explained because it is not directly related to this invention, the degradation of the secondary battery can be managed by a value obtained by subtracting the residual capacity from the charge capacity and a mileage corresponding thereto, which also makes it possible to grasp timing of battery replacement.

This processing has the same basic action on drive as that of the processing at the end of use in the above-described (2), and further includes processing on charge added thereto.

In the flowchart in FIG. 5, explanation is made on processing after the manager is confirmed by the check at the installation of the card.

First, in step D1, the controller 5 obtains the current time from the clock means 7 via the system bus 12, writes the current time and the vehicle number held in the memory 6 via the interface means 15 in specified locations within the first and second information regions in the card, clears the other parts, and writes checksums. Further, the controller 5 executes writing to specify the first information region into a writing management section, in the memory 6 directly managed by the controller 5, which specifies a predetermined location in an information region into which next writing is executed, and then proceeds to step D2.

In step D2, the controller 5 checks whether or not it is a stop after driving, and when it is a stop after driving, the controller 5 proceeds to step D3 and otherwise to step D6.

In step D3, the controller 5 obtains the current time from the clock means 7 via the system bus 12 to calculate a period of use. Similarly, the controller 5 obtains the rotation information from the wheel rotation detector 10 to find a mileage from, for example, the circumference of the wheel. Then, the controller 5 generates checksum data of all information including a drive start time and writes the information including a use end time, the period of use for driving, the mileage, the checksum data into the information region which is previously specified by the writing management section. The controller 5 stores in the writing management section the second information region when the first information region is specified currently, or stores the first information region when the second information region is specified, and then proceeds to step D4.

In step D4, the controller 5 checks whether or not the card is removed, and proceeds to step D5 when the card is removed, and proceeds to step D8 when not removed (still installed). In step D5, the controller 5 brings the electric vehicle 1 into a waiting state by a predetermined method and ends the processing.

In the case where the controller 5 proceeds from step D2 to step D6, it checks whether or not charge is being performed, and proceeds to step D7 when charge is being performed and otherwise proceeds to step D8.

In step D7, what is needed is a function of detecting a charge capacity which is not stored in the charger 20. The controller 5 obtains information on charge capacity until this point of time from the charger 20 via the system bus 12 and adds thereto the residual capacity and the charge capacity of the secondary battery 30 in each of the battery units 3A and 3B to calculate capacity of a battery section at the present moment. Then, the controller 5 writes information including a use end time and checksum data into the information region which is previously specified by the writing management section of the memory 6, and stores in the writing management section the second information region when the first information region is specified currently, or stores the first information region when the second information region is specified, and then proceeds to step D4.

In step D8, the controller 5 obtains the current time from the clock means 7 via the system bus 12 to calculate a period of use. Further, the controller 5 generates checksum data and updates the use end time and the checksum data in the information region which is previously specified by the writing management section, and stores in the writing management section the second information region when the first information region is specified currently, or stores the first information region when the second information region is specified, and then proceeds to step D2.

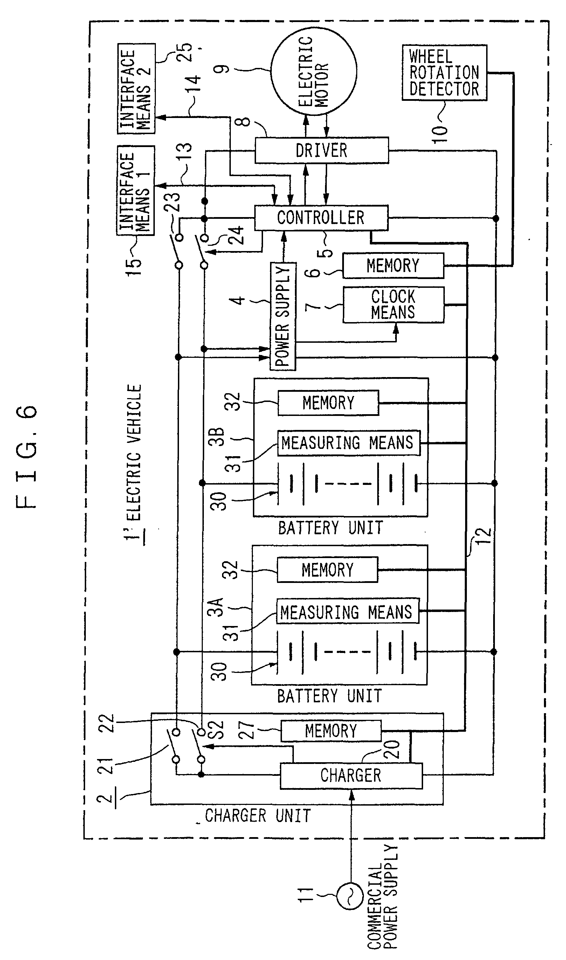

Next, a second embodiment of the electric vehicle according to the invention is explained with FIG. 6 to FIG. 8. FIG. 6 is a block circuit diagram showing a configuration of the electric vehicle, in which portions corresponding to those in FIG. 1 are assigned the same numerals and symbols and the description thereof is omitted.

An electric vehicle 1' shown in FIG. 6 has almost the same configuration as that of the electric vehicle 1 shown in FIG. 1 and differs therefrom in the following points.

The points are that the electric vehicle 1' is provided with, in addition to a first interface means 15 which is the same as the interface means 15 shown in FIG. 1, a second interface means 25 which is connected to the controller 5 by an IF signal line 14, and that the electric vehicle 1' is provided with a memory 27 including a nonvolatile memory and an interface with a system bus 12 in a charger unit 2.

Further, in the electric vehicle 1', the charger unit 2 and battery units 3A and 3B are attachably and detachably mounted on a vehicle main body to be easily detached from the vehicle main body. Therefore, it is possible to detach the charger unit 2 and the battery units 3A and 3B from the electric vehicle 1', connect the charger unit 2 to a commercial power supply 11 at an arbitrary place with the commercial power supply 11, and connect the battery units 3A and 3B separately or both to the charger unit 2, so as to charge each secondary battery 30 thereof.

As for arrangement of the interface means 15 and 25, the second interface means 25 for a card for management is preferably disposed in a helmet case because it is usually not removed. The first interface means 15 for a user is preferably disposed in an instrument panel section or in the helmet case as required.

First, schematic action of the electric vehicle 1' of the second embodiment is explained.

In the first embodiment, when the manager arranges or manages information on operation of the electric vehicle 1, it is necessary to collect all the cards of the users and fetch information from the cards using a personal computer or the like. Alternatively, the users need to report the card information to the manager by a predetermined method. As the number of users increases, collection of the card information becomes harder.

Hence, the second embodiment improves the above point, in which two interface means for the user and for management are provided to be the first interface means 15 and the second interface means 25, the first interface means 15 being for the user and the second interface means 25 being for management.

In this case, for management, the manager for charge and the like needs to have a card which is authorized to use the vehicle related to vehicle operation. Further, since information on the operation is recorded on the card for management, it becomes unnecessary to record the information on the operation on the user's and manager's cards. In other words, the user's and manager's cards serve as a check for authorization to be usable, and the operation information such as driving, charge and so on is recorded on the card for management.

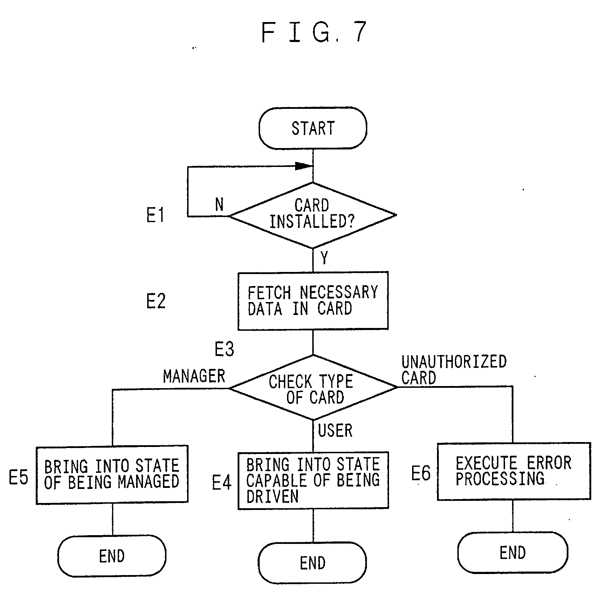

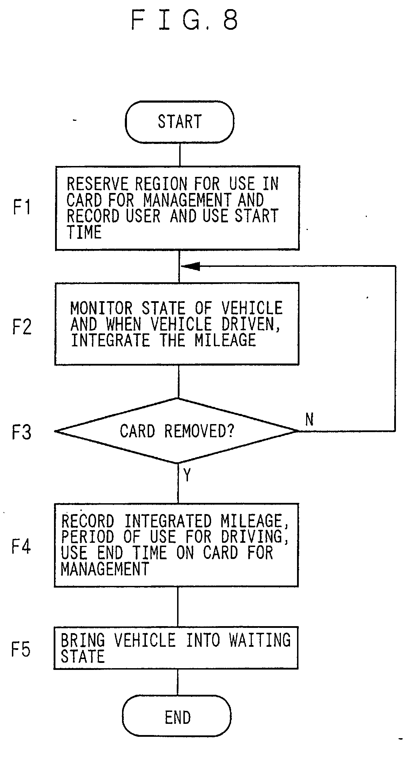

Next, action according to the invention by the electric vehicle 1' is explained with reference to flowcharts in FIG. 7 and FIG. 8.

### (1) Determination of authorization to use

FIG. 7 shows a flowchart of processing by the controller 5 from the performance of determination of authorization to use the electric vehicle 1' to a state capable of being driven or a state for management. This processing is the same as the processing "(1) Determination of authorization to use" in the first embodiment explained with FIG. 3.

When this processing starts, the controller 5 checks the installation of the card via the IF signal line 13 or the IF signal line 14 and the first interface means 15 or the second interface means 25 in step E1. When the card is installed, the controller 5 proceeds to step E2. This check is performed by reading a signal indicating the installation of the card or information on a predetermined location or the like. As for selection between the two interface means 15 and 25 here, the first interface means 15 may be for the user and the second interface means 25 may be for management as described above.

In that case, in step E2, the controller 5 reads necessary data from a predetermined location in the installed card via the interface means 15, and proceeds to step E3.

In step E3, the controller 5 checks the type of the card (whether or not the card is authorized to be used) as well as determines whether or not the card is one fot a person authorized use (driving) or the manager, and so on. When the card is one fot the user, the controller 5 proceeds to step E4, when the card is one for the manager, it proceeds to step E5, and when the card is an unauthorized card other than those, it proceeds to step E6, respectively.

In step E4, the controller 5 brings the electric vehicle 1' into the state capable of being driven by a predetermined method, and ends this processing while maintaining the state capable of being driven.

In step E5, the controller 5 brings the electric vehicle 1' into the state of being managed by a predetermined method, and ends this processing while maintaining the state of being managed.

In step E6, the controller 5 executes predetermined error processing (at least prohibiting driving) and ends this processing. As the error processing, the controller 5 allows a buzzer to sound, performs a display, or gives information "You are not authorized to use the vehicle with this card." by speech synthesis, though they are not shown.

### (2) Processing at the end of use

Next, the processing by the controller 5 when the use of the electric vehicle 1' is completed is explained with the flowchart in FIG. 8.

When the use of the electric vehicle 1' is completed, necessary information as a managing system such as a user, a use start/end time, a period of use for driving, mileage and the like is recorded on the card for management.

In the flowchart in FIG. 8, explanation is made on the processing after the user is confirmed by the check at the installation of the card.

First, in step F1, the controller 5 reserves a data region for this use in the card for management via the second interface means 25. Further, the controller 5 obtains the current time from the clock means 7 via the system bus 12, fetches via the first interface means 15 the information on the user recorded in the predetermined location in the card, and fetches, for example a vehicle number stored in the memory 6. Then, the controller 5 records each piece of information in the predetermined location in the data region previously reserved in the card for management.

Next, the controller 5 proceeds to step F2, and constantly monitors the state of the electric vehicle 1' at all time. When the electric vehicle 1' is driven, the controller 5 obtains the mileage from information of the wheel rotation detector 10 and information on the circumference of the wheel and integrates and holds the mileage of the vehicle.

Thereafter, in step F3, the controller 5 checks whether or not the card is removed from the first interface means 15, and returns to step F2 when the card is not removed (still installed), and proceeds to step F4 when removed.

In step F4, the controller 5 records necessary information such as the previously integrated mileage, a use end time (current time), a period of use and so on in the predetermined location in the data region reserved in the card for management, and then proceeds to step F5.

In step F5, the controller 5 brings the electric vehicle 1' into a waiting state by a predetermined method and ends this processing.

It should be noted that the card used in the embodiments may be a magnetic system or an IC memory as long as it has a nonvolatile memory. Further, there is no limitation in method, shape and so on if the card can send and receive information by the interface means and is suitable for the purpose of its use in the invention. For example, by making the connecting structure of the interface means, signal arrangement, signal protocol and so on conform to PCMCIA which is generally used in personal computers, it becomes possible to use a widespread memory card conforming to PCMCIA.

### INDUSTRIAL APPLICABILITY

As has been described, the electric vehicle according to the invention can execute determination of authorization to use the electric vehicle and/or determination of authorization to handle battery charge and the like by the card having the nonvolatile memory so as to limit the user/manager.

Further, it is possible to record necessary information on use conditions (vehicle number, time and period of use, distance of use and so on) on the card so as to improve precision and facility of operation management.

Furthermore, by providing two interfaces, the user identification information and the operation management information can be separately stored in the cards installed therein, respectively, so as to omit time and trouble of the user and the manager and to improve facility of operation.

## Claims

1. An electric vehicle including at least a pack of rechargeable secondary battery, an electric motor for driving a running section such as wheels and the like, and a controller for conducting control to drive said electric motor by electric power of said secondary battery, comprising:
a clock means for counting a current time;
a wheel rotation detector for detecting rotation of the wheels; and
an interface means for storing in a detachable and attachable external storage medium vehicle management information generated by said controller based on information from said clock means and said wheel rotation detector, and for reading the stored information.

2. The electric vehicle according to claim 1, wherein
said interface means is provided in an instrument panel section of the vehicle.

3. The electric vehicle according to claim 1, wherein
said interface means is provided in a helmet case of the vehicle.

4. The electric vehicle according to claim 1, wherein
an interface means for a user and an interface means for management are provided as said interface means.

5. The electric vehicle according to claim 4, wherein
said interface means for a user is provided in an instrument panel section and said interface means for management is provided in a helmet case, respectively.

6. An electric vehicle managing method for managing the electric vehicle according to claim 1, wherein
information on mileage is stored at a stop time after driving of said electric vehicle and a battery capacity of said secondary battery is stored during charge of said secondary battery respectively in said external storage medium via said interface means as said vehicle management information.

7. The electric vehicle managing method according to claim 6, wherein
when said vehicle management information is stored in said external storage medium, two information regions are reserved in said external storage medium, and said vehicle management information is stored in turn in the two reserved regions.
